# EUROPEAN PATENT APPLICATION

(11) **EP 1 081 654 A2**
(43) Date of publication of application: **07.03.2001**
(21) Application number: 00307437.4
(22) Date of filing: 30.08.2000
(51) Int. Cl.: G06T 15/40

(54) **Method and apparatus for providing depth blur effects within a 3d videographics system**

(30) Priority: 31.08.1999 US 386844
(71) Applicant: Nintendo Co., Limited, Kyoto-shi, Kyoto 605-8660 (JP)
(72) Inventor: Yasumoto, Yoshitaka, Redmond, Washington 98052 (US)
(74) Representative: Gray, John James

(57) **Abstract**

Efficient techniques for blurring an image based on depth within a 3D graphics system allow an artist or programmer to specify one or more depth thresholds. Pixels (24, 36) having depths that are further away than a particular depth threshold are blurred more than pixels (12,16) having depths that are closer than the depth threshold. Efficient summing/averaging techniques can be used to blend a variable number of neighboring pixel colors (16, 18, 20 etc; the number of pixels blended being selected based on pixel depth) to provide depth-based blur. An enhancement blends only those pixels that are further away than the target pixel. Using such techniques, display surfaces that are further away from the viewpoint appear blurred and less distinct than surfaces that are closer to the viewpoint. The resulting visual effects can efficiently create more realistic images for a number of applications such as, for example, driving games, games in which a character travels progressively along a path, etc.

## Description

The present invention relates to 3D computer graphics, and more particularly, to methods and apparatus for automated display of three-dimensional objects with intentionally introduced efficient depth-based blurring.

Computer graphics images tend to have a distinctive crystal-clear quality. Sometimes, the extreme clarity of 3D imagery is not desirable and creates instead an appearance of unreality and falseness. For example, in the real world, the perceived colors of objects change depending on the distance of the objects from the viewer. As light travels through the air, it loses some of its color as it travels. The farther the light travels, the more color it loses. This effect is more pronounced if fog or haze is in the atmosphere.

Some computer graphics systems provide a Z-depth "fog" effect that makes objects fade into the distance in a realistic way. This fog effect typically blends a surface color with a fog color -- with the amount of blending depending on the distance of the surface from the viewpoint. When Z-depth fog is activated, an object located at a Z depth of 100 meters is more obscured by the "atmosphere" than an object located at 50 meters. It is normally possible to specify the color of the fog and the distance at which the fog will completely obscure an object. See for example, O'Rourke, Principles of Three-Dimensional Computer Animation (Norton & Co. 1998) at, for example, pages 134-139 ("Atmospheric Effects").

Some computer graphics systems also provide certain techniques that control the level of detail of mapped texture images through prefiltering interpolation based on distance (so-called "mip-mapping"). See, e.g., Williams, Lance, *Pyramidal Parametrics,* Computer Graphics Vol. 17, No. 3, pp. 1-11 (July 1983).

While such sophisticated techniques as described above are generally known, further improvements are possible.

For example, it would be desirable to provide an efficient technique of reduced complexity for selectively reducing level of detail of certain parts of a generated image based on depth. Efficiency is especially important in low cost 3D graphics systems such as, for example, interactive 3D home video game systems. More efficient techniques for generating visual effects are less taxing on scarce system resources, and thus can be used to enhance the overall visual experience without significantly sacrificing speed and other performance.

The present invention solves this problem by providing efficient techniques in a 3D computer graphics system for blurring an image based on depth. In accordance with one exemplary embodiment, an artist or programmer can specify one or more depth thresholds to define different levels of detail. Pixels having depths that are further away than the depth threshold are blurred more. Pixels having depths that are closer than the depth threshold are blurred less or not at all. Efficient summing/averaging techniques can be used to blend pixel colors to provide depth-based blur. Using such techniques, display surfaces that are further away from the viewpoint appear blurred and less distinct than surfaces closer to the viewpoint. The resulting visual effects can be highly effective for a number of applications such as, for example, driving games, games in which a character travels progressively along a path, etc.

### BRIEF DESCRIPTION OF THE DRAWINGS

These and other features and advantages provided by the present invention will be better and more completely understood by referring to the following detailed description of preferred embodiments in conjunction with the drawings of which:
Figure 1 illustrates depth based blur in accordance with the present invention;
Figure 2 shows example pixel color averaging in the x direction to provide x-blur based on pixel depth;
Figures 3-3E show example home video game system implementations the present invention can operate in connection with;
Figure 4 shows example data structures;
Figure 5 shows an example flowchart of steps performed to provide depth based blur;
Figure 6 shows an example more detailed flowchart of steps to provide depth based blur;
Figure 7 illustrates a further enhancement in which pixels that are more distant than a target pixel are included in the average; and
Figure 8 shows an example flowchart of steps performed to implement the Figure 6 enhancement.

### DETAILED DESCRIPTION OF PRESENTLY PREFERRED EXAMPLE EMBODIMENTS

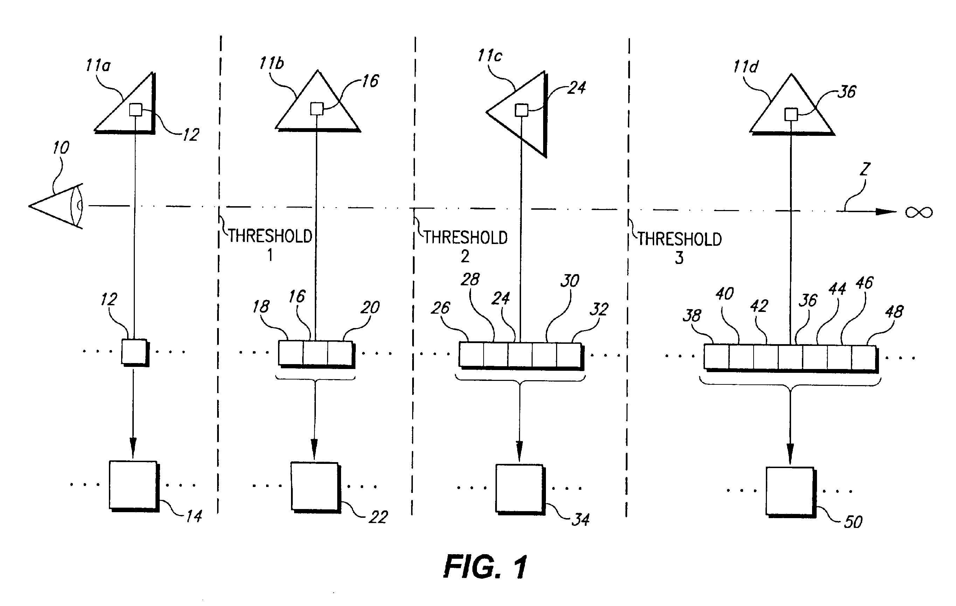

Figure 1 shows a depth based blur technique in accordance with the present invention. In typically 3D graphics system, a Z (depth) axis is defined between a viewpoint 10 and a maximum distance within a three-dimensional space. Generally speaking, display surfaces can be defined anywhere along this Z axis. A Z-buffer memory keeps track of pixel and/or sub-pixel depth on a pixel-by-pixel (sub-pixel by sub-pixel) basis.

In accordance with the present invention, at least one depth threshold is defined along the Z axis. Each pixel to be displayed is tested to determine the magnitude of its depth (Z value) relative to the depth threshold. Pixels representing surfaces that are closer to viewpoint 10 than the depth threshold are blurred less (or not at all). Pixels representing surfaces that are more distant from viewpoint 10 than the depth threshold are blurred more.

For example, pixel or sub-pixel 12 defined on a surface 11a having a Z (depth) value that is less (closer) than depth "threshold 1" is mapped (e.g., one-to-one) into a display pixel 14 without any intentional blurring. A pixel or sub-pixel 16 defined on a surface 11b having a Z (depth) value that is greater (further away) than "threshold1" in the Z direction is blended (e.g., averaged) with one or more additional pixels or sub-pixels (18, 20) to produce a blurred display pixel 22.

Three different depth thresholds (threshold1, threshold2, threshold3) are defined in the particular Figure 1 example shown:
- pixel or sub-pixel 12 defined on surface 11a having a depth between Z=0 and Z=thresholdl is unblended (i.e., it is not intentionally blurred);
- pixel or sub-pixel 16 defined on surface 11b having a depth between Z=threshold1 and Z=threshold2 is blended with a small adjacent area of neighboring pixels or sub-pixels (e.g., the pixel 16 plus two adjacent pixels 18, 20 are averaged) to provide a small degree of blurring;
- pixel or sub-pixel 24 defined on surface 11c having a depth between Z=threshold2 and Z=threshold3 is blended with a somewhat larger adjacent area of neighboring pixels or sub-pixels (e.g., the pixel or sub-pixel 24 plus four adjacent pixels or sub-pixels 26, 28, 30, 32 are averaged) to provide a larger degree of blurring; and
- pixel or sub-pixel 36 defined on surface 11d having a depth Z>threshold3 is blended with a still larger adjacent area of neighboring pixels (or sub-pixels) (e.g., the pixel or sub-pixel 36 plus six adjacent pixels or sub-pixels 38, 40, 42, 44, 46, 48 are averaged) to provide a still larger degree of blurring.

Any number of different depth thresholds from 1 to N can be used. The size of the adjacent area of neighboring pixels or sub-pixels that is averaged for any particular depth threshold can be chosen by the artist to provide a desired amount of blurring. Because it is convenient to work on a line buffer basis, blurring is performed only in the x direction in this example. However, blurring in the y direction only, or in both the x and y directions, is also possible.

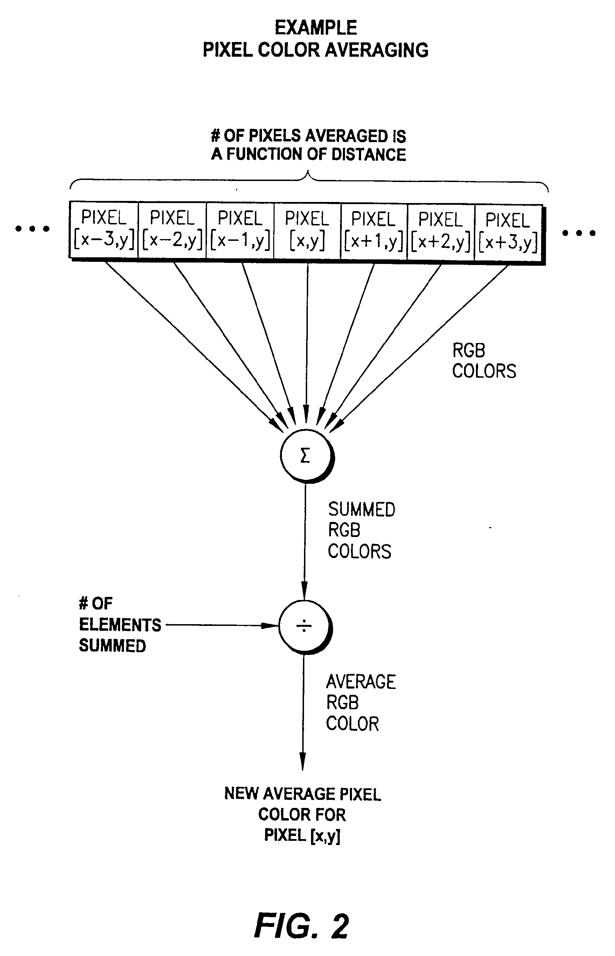

Figure 2 shows an example pixel or sub-pixel averaging process provided in accordance with the present invention. In this example process, a number of pixels or sub-pixels is selected as a function of distance (Z) from the viewpoint of the surface on which the pixels (sub-pixels) lie. This number of pixels (sub-pixels) is averaged by summing the color values (e.g., RGB) for these pixels (sub-pixels) together to achieve a summed value. The summed value may then be divided by the number of pixels summed to provide a simple average. Weighted averaging may be used if desired.

### Example Implementation

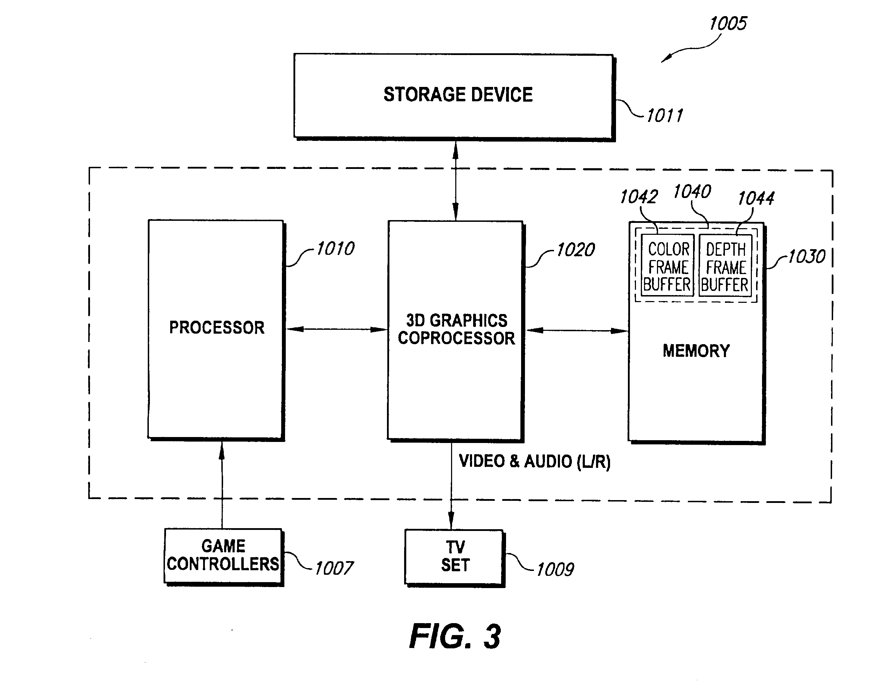

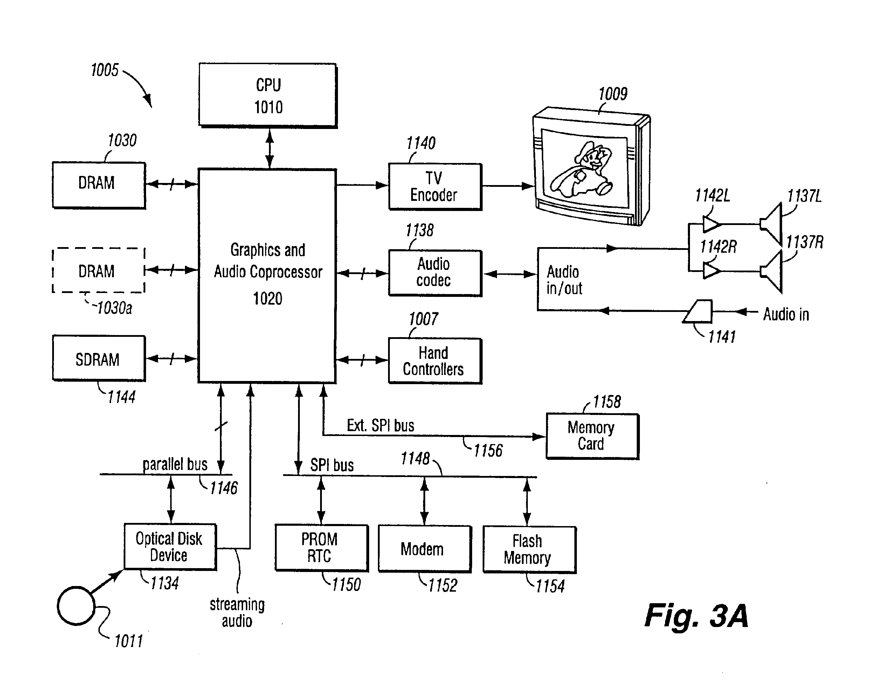

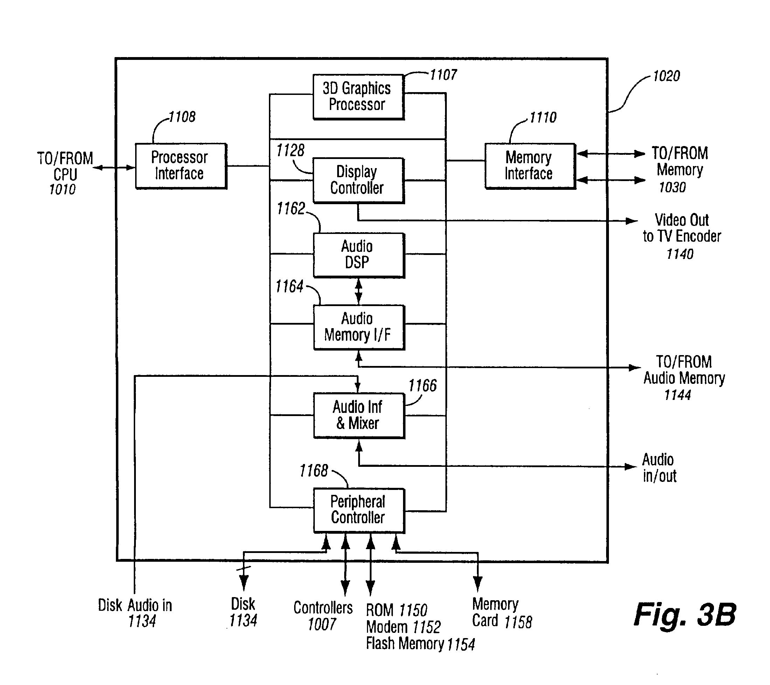

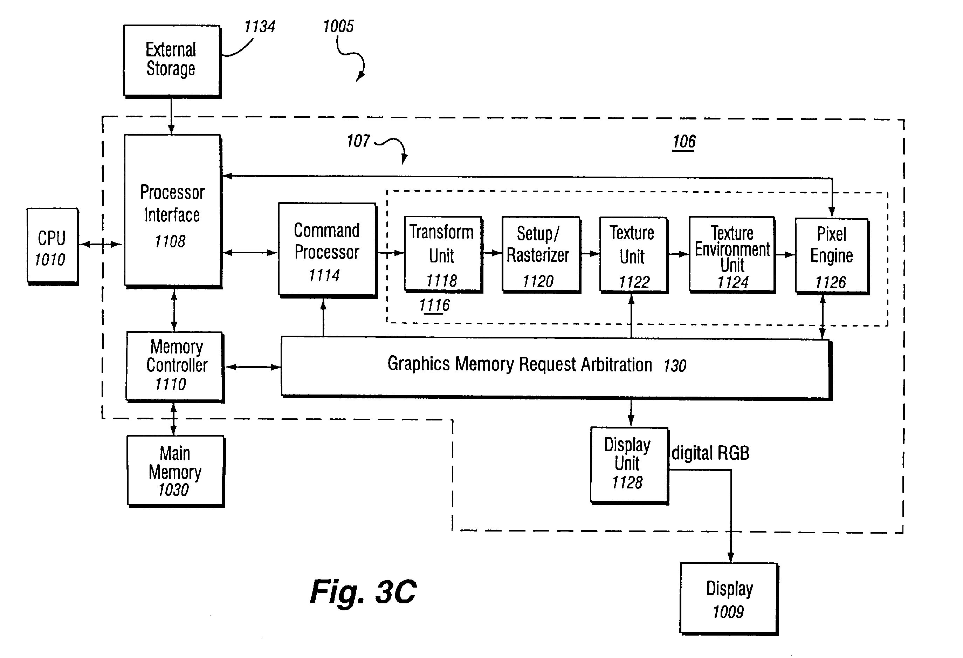

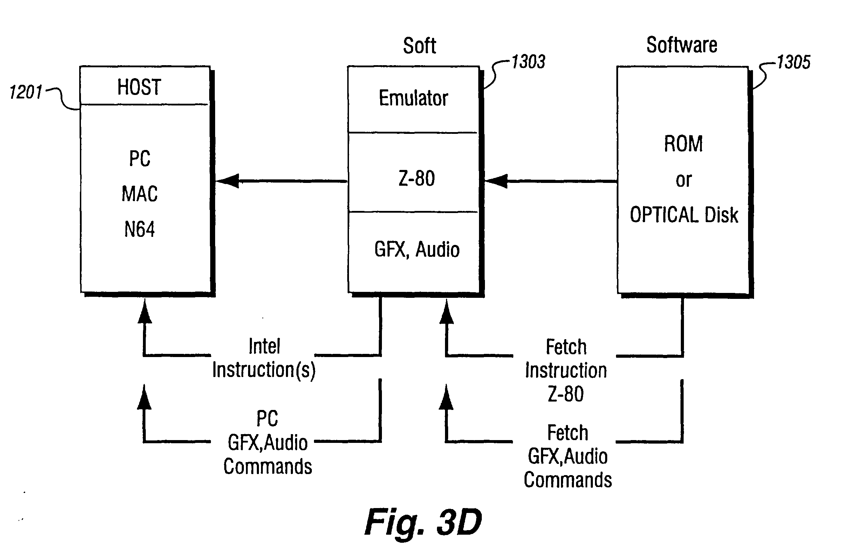

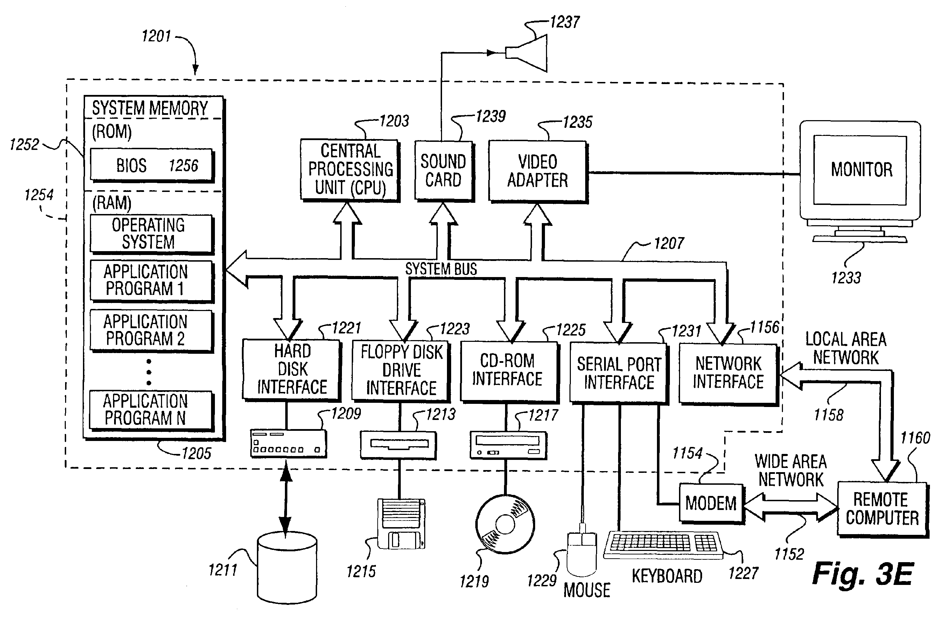

Figure 3 shows an example 3D videographics system 1005 for displaying images intentionally blurred based on depth in accordance with the present invention. System 1005 responds to interactive real time inputs from e.g., game controllers 1007 and/or other manual input devices, and generates a visual display on a display device 1009 (e.g., a home color television set, video monitor or other display). System 1005 may operate under control of a computer program such as a video game program stored in an external storage medium 1011 (e.g., an interchangeable video game cartridge, a CD-ROM or other optical disk, etc.)

In this example, system 1005 includes a processor 1010, a 3D graphics coprocessor 1020, and a memory 1030. Processor 1010 provides 3D graphics commands to graphics coprocessor 1020. Graphics coprocessor 1020 acts on these 3D graphics commands to interactively generate 2D views of a 3D world. For example, graphics coprocessor 1020 may include a hardware-based 3D graphics pipeline that manipulates graphics primitives such as polygons defined within three-dimensional space, and generates pixels representing a visual 2D image of the three-dimensional space projected onto a viewing plane based on an arbitrarily selected viewpoint. In this example, the user can change the viewpoint on a real-time interactive basis by operating game controllers 1007.

Graphics coprocessor 1020 stores display pixels it generates in a frame buffer 1040 within memory device 1030. Frame buffer 1040 comprises a color frame buffer 1042 and a depth (Z) buffer 1044. In this example, color frame buffer 1042 stores a two-dimensional array of red, green and blue (RGB) color values. There may be a one-to-one correspondence between the stored RGB color values and pixels to be displayed on display 1009, or frame buffer 1042 may store sub-samples. Z buffer 1044 stores depth values (e.g., distance in the z direction relative to the viewpoint) for each pixel or sub-pixel stored in the color frame buffer. As is well known, z buffer 1044 is used for various purposes (e.g., hidden surface removal) as the graphics pipeline "builds" the image. In the preferred embodiment, the contents of z buffer 1044 also play a role in selectively blending colors to blur based on depth.

Figure 3A is a more detailed schematic diagram of an overall example interactive 3D computer graphics system 1005 in which the present invention may be practiced. System 1005 can be used to play interactive 3D video games accompanied by interesting stereo sound. Different games can be played by inserting appropriate storage media such as optical disks 1011 into an optical disk player 1134. A game player can interact with system 1005 in real time by manipulating input devices such as handheld controllers 1007, which may include a variety of controls such as joysticks, buttons, switches, keyboards or keypads, etc.

In this example, main processor 1010 receives inputs from handheld controllers 1007 (and/or other input devices) via coprocessor 1005. Main processor 1010 interactively responds to such user inputs, and executes a video game or other graphics program supplied, for example, by external storage 1011. For example, main processor 1010 can perform collision detection and animation processing in addition to a variety of real time interactive control functions.

Main processor 1010 generates 3D graphics and audio commands and sends them to graphics and audio coprocessor 1020. The graphics and audio coprocessor 1020 processes these commands to generate interesting visual images on a display 1009 and stereo sounds on stereo loudspeakers 1137R, 1137L or other suitable sound-generating devices.

System 1005 includes a TV encoder 1140 that receives image signals from coprocessor 1005 and converts the image signals into composite video signals suitable for display on a standard display device 1009 (e.g., a computer monitor or home color television set). System 1005 also includes an audio codec (compressor/decompressor) 1138 that compresses and decompresses digitized audio signals (and may also convert between digital and analog audio signalling formats). Audio codec 1138 can receive audio inputs via a buffer 1141 and provide them to coprocessor 1020 for processing (e.g., mixing with other audio signals the coprocessor generates and/or receives via a streaming audio output of optical disk device 1134). Coprocessor 1020 stores audio related information in a memory 1144 that is dedicated to audio tasks. Coprocessor 1020 provides the resulting audio output signals to audio codec 1138 for decompression and conversion to analog signals (e.g., via buffer amplifiers 1142L, 1142R) so they can be played by speakers 1137L, 1137R.

Coprocessor 1020 has the ability to communicate with various peripherals that may be present within system 1005. For example, a parallel digital bus 1146 may be used to communicate with optical disk device 1134. A serial peripheral bus 1148 may communicate with a variety of peripherals including, for example, a ROM and/or real time clock 1150, a modem 1152, and flash memory 1154. A further external serial bus 1156 may be used to communicate with additional expansion memory 1158 (e.g., a memory card).

Figure 3B is a block diagram of example components within coprocessor 1020. Coprocessor 1020 may be a single integrated circuit including a 3D graphics processor 1107, a processor interface 1108, a memory interface 1110, an audio digital signal processor (DSP) 1162, an audio memory interface (I/F) 1164, an audio interface and mixer 1166, a peripheral controller 1168, and a display controller 1128.

3D graphics processor 1107 performs graphics processing tasks, and audio digital signal processor 1162 performs audio processing tasks. Display controller 1128 accesses image information from memory 1030 and provides it to TV encoder 1140 for display on display device 1009. Audio interface and mixer 1166 interfaces with audio codec 1138, and can also mix audio from different sources (e.g., a streaming audio input from disk 1011, the output of audio DSP 1162, and external audio input received via audio codec 1138). Processor interface 1108 provides a data and control interface between main processor 1010 and coprocessor 1020. Memory interface 1110 provides a data and control interface between coprocessor 1020 and memory 1030. In this example, main processor 1010 accesses main memory 1030 via processor interface 1108 and memory controller 1110 that are part of coprocessor 1020. Peripheral controller 1168 provides a data and control interface between coprocessor 1020 and the various peripherals mentioned above (e.g., optical disk device 1134, controllers 1007, ROM and/or real time clock 1150, modem 1152, flash memory 1154, and memory card 1158). Audio memory interface 1164 provides an interface with audio memory 1144.

Figure 3C shows a more detailed view of 3D graphics processor 1107 and associated components within coprocessor 1020. 3D graphics processor 1107 includes a command processor 1114 and a 3D graphics pipeline 1116. Main processor 1010 communicates streams of graphics data (i.e., display lists) to command processor 1114. Command processor 1114 receives these display commands and parses them (obtaining any additional data necessary to process them from memory 1030), and provides a stream of vertex commands to graphics pipeline 1116 for 3D processing and rendering. Graphics pipeline 1116 generates a 3D image based on these commands. The resulting image information may be transferred to main memory 1030 for access by display controller 128 -- which displays the frame buffer output of pipeline 1116 on display 1009. A memory arbitration circuitry 130 arbitrates memory access between graphics pipeline 1116, command processor 1114 and display unit 128.

As shown in Figure 3C, graphics pipeline 1116 may include transform unit 1118, a setup/rasterizer 1120, a texture unit 1122, a texture environment unit 1124 and a pixel engine 1126. In graphics pipeline 1116, transform unit 1118 performs a variety of 3D transform operations, and may also perform lighting and texture effects. For example, transform unit 1118 transforms incoming geometry per vertex from object space to screen space; transforms incoming texture coordinates and computes projective texture coordinates; performs polygon clipping; performs per vertex lighting computations; and performs bump mapping texture coordinate generation. Set up/rasterizer 1120 includes a set up unit which receives vertex data from the transform unit 1118 and sends triangle set up information to rasterizers performing edge rasterization, texture coordinate rasterization and color rasterization. Texture unit 1122 performs various tasks related to texturing, including multi-texture handling, post-cache texture decompression, texture filtering, embossed bump mapping, shadows and lighting through the use of projective textures, and BLIT with alpha transparency and depth. Texture unit 1122 outputs filtered texture values to the texture environment unit 1124. Texture environment unit 124 blends the polygon color and texture color together, performing texture fog and other environment-related functions. Pixel engine 1126 performs z buffering and blending, and stores data into an on-chip frame buffer memory.

Graphics pipeline 1116 may include one or more embedded DRAM memories (not shown) to store frame buffer and/or texture information locally. The on-chip frame buffer is periodically written to main memory 1030 for access by display unit 1128. The frame buffer output of graphics pipeline 1116 (which is ultimately stored in main memory 1030) is read each frame by display unit 1128. Display unit 1128 provides digital RGB pixel values for display on display 1009.

It is possible that certain of the above-described video game system components could be implemented as other than the home video game console configuration described above. Generally speaking, home video game software is written to run on a particular system. This video game software can sometimes be "ported" (translated) to a different system in a way that takes the different system's hardware and software configuration into account. Such "porting" usually requires access to the video game source code. Another way to run game software on a system with a different configuration is to cause the second system to emulate the first system. If the second system can successfully emulate or simulate the hardware and software resources of the first system, then the second system will be able to successfully execute the binary executable image of the video game software and no access to the game software source code will be required.

In a home video game context, an emulator is a system different from the one for which the game program was written, that is designed to allow the game program to run. As one example, the emulator system may provide a hardware and/or software configuration (platform) that is different from the hardware and/or software configuration (platform) of the system the game software was written for. The emulator system includes software and/or hardware components that emulate hardware and/or software components of the system the game software was written for. For example, the emulator system may comprise a general purpose digital computer such as a personal computer, which executes a software emulator program that simulates the hardware and/or firmware of the system the game software was written for.

Emulator software may be developed which allows games written for the above-described console-based home video game system shown in Figures 3-3C to be played on personal or other type of general purpose digital computers. Some such general purpose digital computers (e.g., IBM or MacIntosh personal computers and compatibles) are now equipped with 3D graphics cards that provide 3D graphics pipelines compliant with DirectX or other standard 3D graphics command APIs. They may also be equipped with stereophonic sound cards that provide high quality stereophonic sound based on a standard set of sound commands. Such multimedia-hardware-equipped personal computers running emulator software may have sufficient performance to approximate the graphics and sound performance of a dedicated home video game console hardware configuration. Emulator software controls the hardware resources on the personal computer platform to simulate the processing, 3D graphics, sound, peripheral and other capabilities of the home video game console platform the game programmer wrote the game software for.

Figure 3D illustrates an example overall emulation process using a host platform 1201, an emulator component 1303, and a game software executable binary image provided on a storage medium such as a ROM or optical disk 1305 or other storage device. Host 1201 may be a general or special purpose digital computing device such as, for example, a personal computer or another type of game console. Emulator 1303 runs on host platform 1201, and provides a real-time conversion of commands, data and other information from storage medium 1305 into a form that can be processed by host 1201. For example, emulator 1303 fetches program instructions intended for execution by a home video game platform such as shown in Figures 3-3C from storage medium 1205 and converts these program instructions to a format that can be executed or otherwise processed by host 1201. As one example, in the case where the game program is written for execution on a platform using a Z-80, MIPS, IBM PowerPC or other specific processor and the host 1201 is a personal computer using a different (e.g., Intel) processor, emulator 1203 fetches one or a sequence of program instructions from storage medium 1305 and converts these program instructions to one or more equivalent Intel program instructions. Similarly, the emulator 1203 fetches graphics commands and audio commands intended for processing by the graphics and audio coprocessor shown in Figure 3, and converts these commands into a format or formats that can be processed by hardware and/or software graphics and audio processing resources available on host 1201. As one example, emulator 1303 may convert these commands into commands that can be processed by a specific graphics and/or or sound card of the host 1201 (e.g., using standard DirectX and sound APIs).

An emulator 1303 used to provide some or all of the features of the video game system described above may also be provided with a graphic user interface (GUI) that simplifies or automates the selection of various options and screen modes for games run using the emulator. In one example, such an emulator 1303 may further include enhanced functionality as compared with the host platform for which the video game software was originally intended.

Figure 3E illustrates a personal computer based host 1201 suitable for use with emulator 1303. The personal computer system 1201 includes a processing unit 1203 and a system memory 1205. A system bus 1207 couples various system components including system memory 1205 to processing unit 1203. System bus 1207 may be any of several types of bus structures including a memory bus or memory controller, a peripheral bus, and a local bus using any of a variety of bus architectures. System memory 1207 includes read only memory (ROM) 1252 and random access memory (RAM) 1254. A basic input/output system (BIOS) 1256, containing the basic routines that help to transfer information between elements within personal computer system 1201, such as during start-up, is stored in the ROM 1252. Personal computer system 1201 further includes various drives and associated computer-readable media. A hard disk drive 1209 reads from and writes to a (typically fixed) magnetic hard disk 1211; a magnetic disk drive 1213 reads from and writes to a removable "floppy" or other magnetic disk 1215; and an optical disk drive 1217 reads from and, in some configurations, writes to a removable optical disk 1219 such as a CD ROM or other optical media. Hard disk drive 1209, magnetic disk drive 1213, and optical disk drive 1217 are connected to system bus 1207 by a hard disk drive interface 1221, a magnetic disk drive interface 1223, and an optical drive interface 1225, respectively. The drives and their associated computer-readable media provide nonvolatile storage of computer-readable instructions, data structures, program modules, game programs and other data for personal computer system 1201. In other configurations, other types of computer-readable media that can store data that is accessible by a computer (e.g., magnetic cassettes, flash memory cards, digital video disks, Bernoulli cartridges, random access memories (RAMs), read only memories (ROMs) and the like) may also be used.

A number of program modules including emulator 1303 may be stored on the hard disk 1211, removable magnetic disk 1215, optical disk 1219 and/or the ROM 1252 and/or the RAM 1254 of system memory 1205. Such program modules may include an operating system providing graphics and sound APIs, one or more application programs, other program modules, program data and game data. A user may enter commands and information into personal computer system 1201 through input devices such as a keyboard 1227 and pointing device 1229. Other input devices may include a microphone, joystick, game controller, satellite dish, scanner, or the like. These and other input devices are often connected to processing unit 1203 through a serial port interface 1231 that is coupled to system bus 1207, but may be connected by other interfaces, such as a parallel port, game port or a universal serial bus (USB). A monitor 1233 or other type of display device is also connected to system bus 1207 via an interface, such as a video adapter 1235.

Personal computer 120 may also include a modem 1154 or other means for establishing communications over wide area network 1152, such as the Internet. Modem 1154, which may be internal or external, is connected to system bus 123 via serial port interface 1231. A network interface 1156 may also be provided for allowing personal computer 1201 to communicate with a remote computing device 1150 (e.g., another personal computer) via a local area network 1158 (or such communication may be via wide area network 1152 or other communications path such as dial-up or other communications means). Personal computer system 1201 will typically include other peripheral output devices, such as printers and other standard peripheral devices.

In one example, video adapter 1235 may include a 3D graphics pipeline chip set providing fast 3D graphics rendering in response to 3D graphics commands issued based on a standard 3D graphics application programmer interface such as Microsoft's DirectX. A set of stereo loudspeakers 1237 is also connected to system bus 1207 via a sound generating interface such as a conventional "sound card" providing hardware and embedded software support for generating high quality stereophonic sound based on sound commands provided by bus 1207. These hardware capabilities allow host 1201 to provide sufficient graphics and sound speed performance to play video games stored in storage medium 1305,

### Example More Detailed Depth Blur Process

Referring to Figures 3-3E, the depth based blur provided in accordance with the present invention may be advantageously performed in hardware and/or software. For example, assuming sufficient time is available, processor 1010 could perform pixel post processing to blur the image stored in color frame buffer 1042 (see Figure 3) by accessing frame buffer 1040 after graphics coprocessor 1020 has rendered an image into the frame buffer but before the image is displayed. Or, hardware and/or software can be provided within graphics coprocessor 1020 to perform this function. In one example embodiment, the contents of color frame buffer 1042 and z buffer 1044 are loaded from memory 1030 into a fast (e.g., cache) memory within coprocessor 1030, and software and/or hardware within the coprocessor (which may make use of existing hardware support such as blending and/or z buffer calculation circuitry within the graphics pipeline) could perform pixel post processing/filtering to provide depth blur. Such depth based blur may, for example, be part of an anti-aliasing post-filtering process providing pixel color objects "on the fly" directly to display 1009. If the frame buffer 1040 is read and processed one line at a time for this orientation, a line buffer can be used to hold the Z values of the previous line. Once the coprocessor 1020 has completed such pixel post-processing, the coprocessor may or may not write the modified color frame buffer 1042 back into memory 1030. The averaged values are provided to video generation circuitry within the coprocessor for generation of a visual image on display 1009.

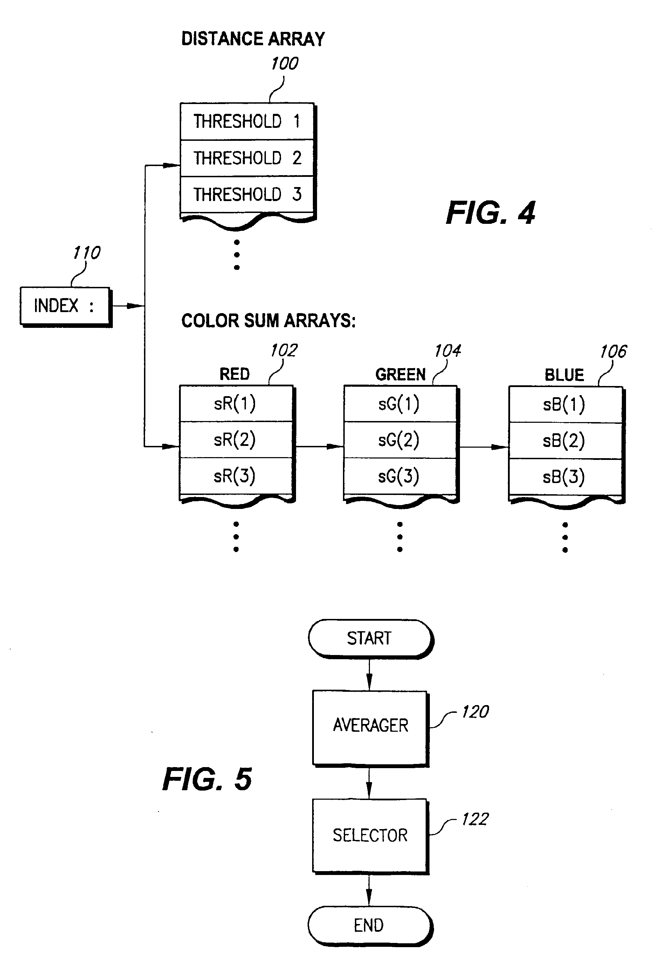

One example efficient depth based blurring process can be performed by processor 1010 using the data structures shown in Figure 4. Such data structures may include a distance array 100, a red color array 102, a green color array 104, and a blue color array 106. In this example, an index i (110) is used to index both distance array 100 and color arrays 102, 104, 106.

Distance array 100 includes the various distance thresholds ("threshold1", "threshold2", "threshold3", ...) sorted in order of increasing distance. Color arrays 102, 104, 106 each include as many array elements as there are distance thresholds. One particularly efficient preferred embodiment processing technique includes an averager 120 that averages pixel values for each of the distance thresholds within distance array 100 and stores these averaged values in color arrays 102, 104, 106 (see Figure 5, block 120). This processing technique also includes a selector 122 that then selects particular color array elements to display based on a comparison between the pixel's depth and the depth thresholds within the distance array (see Figure 5, block 122).

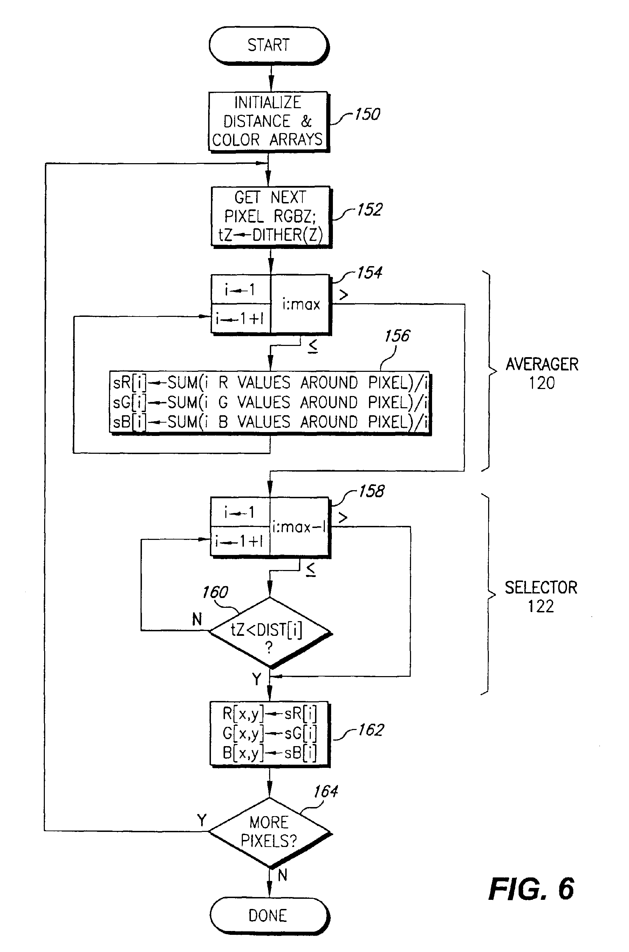

Figure 6 shows an example more detailed flowchart of steps performed (e.g., by processor 1010) to provide depth based blur. In this example, distance array 100 and color arrays 102, 104, 106 are first initialized (e.g., by setting each element of the distance array to a predetermined distance threshold value, and by setting each element of color arrays 102, 104, 106 to zero) (block 150). The color (e.g., R, G, B) and depth (Z) values of a next pixel to be processed are retrieved (block 152). In this example, the pixel depth value Z is filtered using a dither filter to prevent mach banding, yielding a dithered pixel Z value tZ (block 152).

Averager 102 is implemented in this example by a loop controlled by block 154. The loop performs a pixel area averaging over an area corresponding to the first distance "threshold1" to generate averaged pixel colors which it stores in first set of color array 102, 104, 106 elements as selected by loop index i (110) (block 156). In this example, the averaging operation of block 156 uses loop index i (110) to also select the number of pixels to be averaged, and retrieves the pixel values to be averaged from a line buffer (providing blur in the x direction only). Thus, in this particular example, the first loop iteration sets i=1 and therefore, the values written into the first elements sR[1], sG[1], sB[1] of color arrays 102, 104, 106 are identical to the unaveraged pixel color values R[x,y], G[x,y], B[x,y], respectively.

On its next iteration, the loop performs a further pixel area averaging over a further, larger area of neighboring pixels corresponding to the next distance threshold "threshold2" to generate averaged pixel colors which it stores in a next set of color array 102, 104, 106 elements as selected by loop index i (block 156). In one example, 3 pixels may be averaged together in this second iteration. The loop may be iterated as many times ("MAX") as there are different distance thresholds, resulting in a number of different (progressively blurred) potential averaged pixel values being stored in color arrays 102, 104, 106. In one example, the averager 120 for i∃MAX may have a maximum area of (x-3, y) to (x+3, y) for a display of 320 pixels by 240 pixels.

Once averaging process 102 has generated an averaged pixel value for each of the various depth thresholds within distance array 100, selector 112 compares the pixel's depth value Z with the various depth thresholds stored in color arrays 102, 104, 106 to determine which potential pixel value to select. In this example, selector 122 is implemented by a loop controlled by block 158 that also uses loop index i (110). Loop index i (110) is progressively incremented until the distance array value Distance[i] it points to exceeds the dithered pixel depth value tZ (block 160). The color array values sR[i], sG[i], sB[i] the loop array i points to at that point are selected as the new color values for that pixel (block 162).

The above process is performed for each pixel within the image to be displayed (block 164). The averaged pixel color values corresponding to each line of the image may be written back into frame buffer 1042 once that line has been processed. The image may be displayed on display 1009 once all pixels in the image have been processed.

The following is an example of a computer source code implementation:

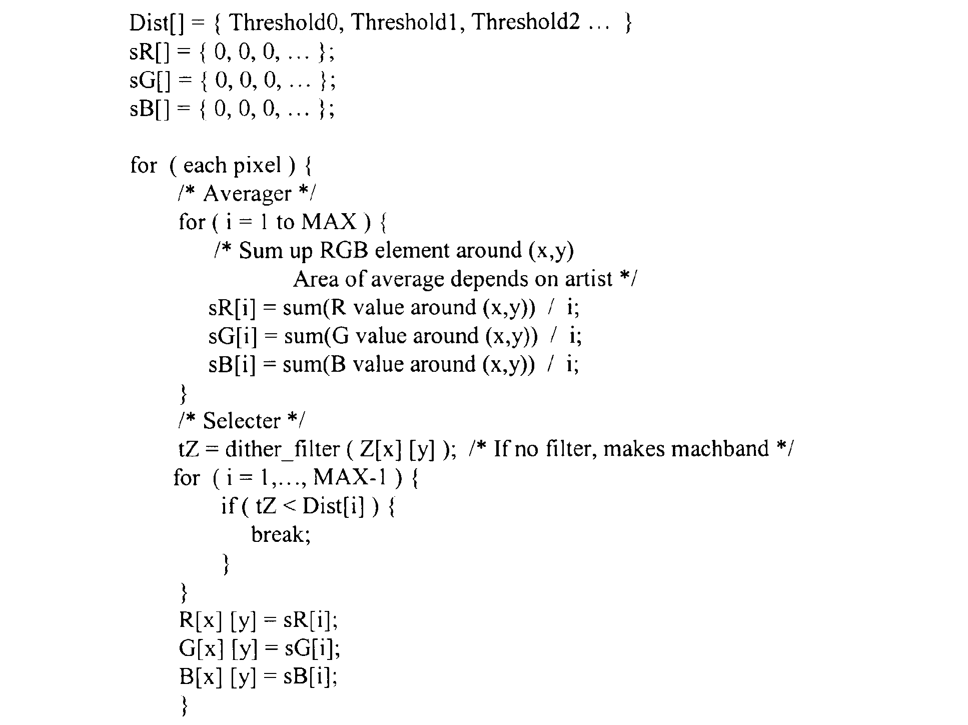

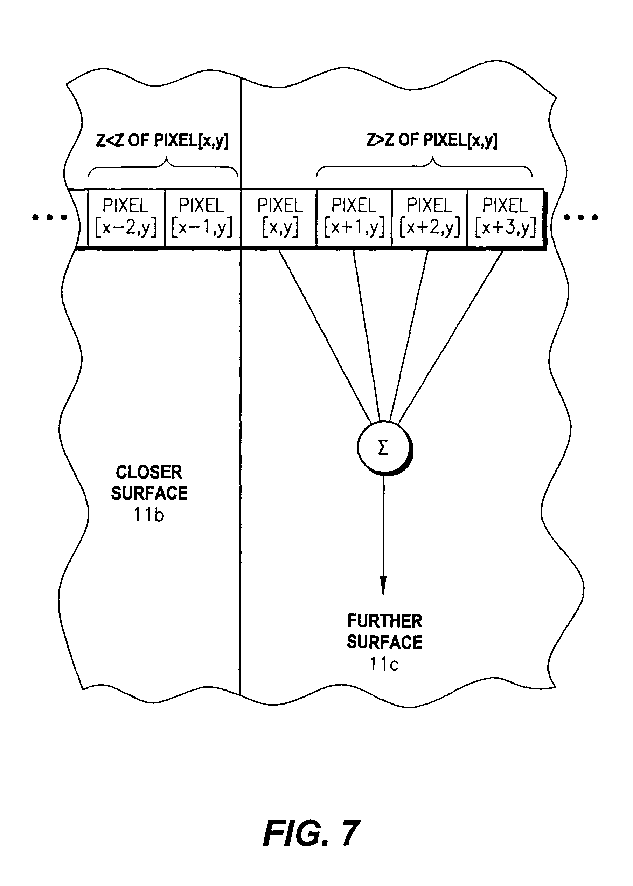

The depth blurring process of Figure 6 sometimes negates the dither effects of smooth shading. For example, Gouraud shading creates a smooth look on a polygonally approximated surface at the intersections between polygons by artificially adjusting the surface normals of the polygon surfaces to approximate a smooth intersecting traditional surface. The Gouraud algorithm calculates color at these intersecting surfaces based on the adjusted surface normals to provide shading that visually approximates the way a smooth intersecting surface would be shaded. To avoid negating this smooth shading effect, averager 120 may be designed to average only those pixels within the selected averaging area that are further away (i.e., have a greater depth value Z) than the target pixel of interest. Figure 7 schematically illustrates such a situation where two display surfaces 11b, 11c are adjacent to one another. Display surface 11b is closer to viewpoint 10 than display surface 11c. In this example, only those pixels whose depths are further away than the target pixel are included in the averaging process. Pixels whose depths are closer than the target pixel are not included in the averaging process.

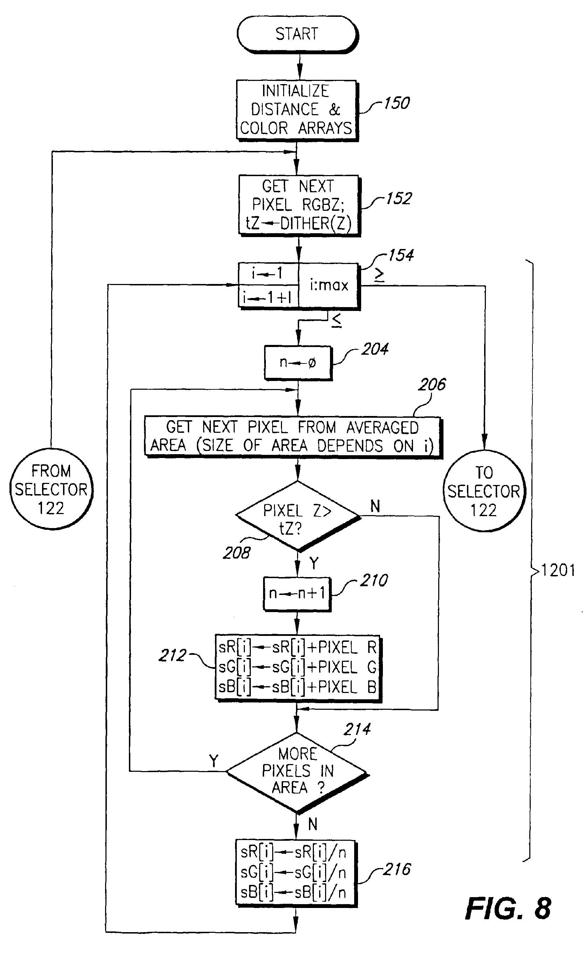

Figure 8 is a flowchart of a modified averager 120' including this additional enhancement. Loop control block 154 in this example is the same as in the Figure 6 example. However, a new variable n (initialized by block 204) is introduced to keep track of how many pixels are being averaged into the present pixel value. Blocks 208, 210, 212 are performed for each pixel within the area available for averaging (determined, as before, in correspondence with the particular depth threshold value Depth[i] indexed by loop counter i (110)). The depth (z) of each pixel in the area is compared with the dithered depth value tZ of the target pixel (block 208). If the compared pixel depth z is less than tZ (indicating that the pixel value being considered for including in the average is closer to viewpoint 10 than the target pixel), this pixel is not included in the average ("N" exit to decision block 208). Conversely, if the compared pixel depth z is greater than tZ (indicating that the pixel value being considered for including in the average is further away than the target pixel to viewpoint 10), n is incremented (block 210) and that pixel's color values (PixelR, PixelG, PixelB) are summed into the color array elements sR[i], sG[i], sB[i] ("Y" exit to decision block 208, and block 212). This test is repeated for each pixel in the area available for averaging (block 214). Once all the pixels in the area have been processed in this manner, the sum calculated by block 212 is normalized by dividing it by n (i.e., the number of pixel values summed into the color array elements) to provide an average (block 216). Selector 122 may then select color array elements based on a comparison of pixel depth with depth thresholds as shown in Figure 6.

As discussed above, the pixel post processing filter can be implemented in a number of ways. The following are examples of computer source code implementations for pixel post-processing filter providing depth-based blur:

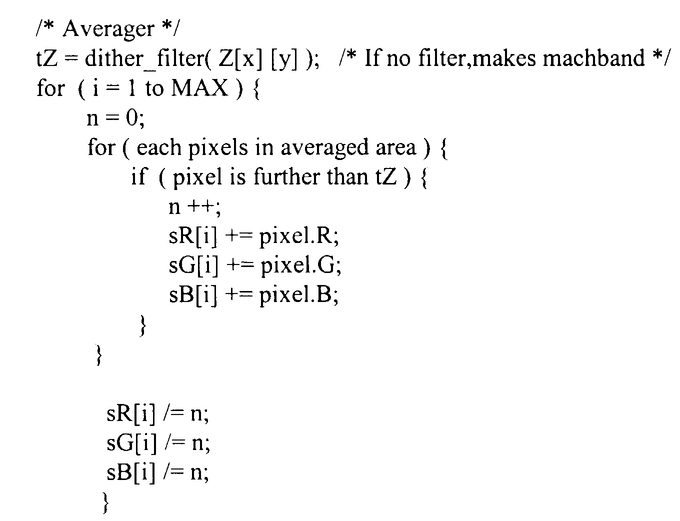

While the invention has been described in connection with what is presently considered to be the most practical and preferred embodiment, it is to be understood that the invention is not to be limited to the disclosed embodiment, but on the contrary, is intended to cover various modifications and equivalent arrangements.

## Claims

1. In a 3D graphics system providing sample color values and associated sample depth values representing an image, a process for intentionally blurring portions of said image based on depth, said process comprising:
(a) comparing a sample depth value with at least one depth threshold;
(b) determining a number of plural sample color values to be averaged based on said comparison;
(c) averaging said determined number of plural sample color values; and
(d) generating a display based on said averaged color values.

2. A process as in claim 1 wherein said averaging step comprises averaging adjacent sample color values.

3. A process as in claim 1 wherein said averaging step comprises averaging sample color values adjacent to one another along a predetermined axis.

4. A process as in claim 3 wherein said predetermined axis comprises the x axis.

5. A process as in any of claims 1 to 4 wherein said process further includes loading said number of associated sample color values into a line buffer, and said averaging step comprises averaging said associated sample color values from said line buffer.

6. A process as in any of claims 1 to 5 wherein said process further includes dithering said depth value, and said comparing step compares said dithered depth value with said at least one predetermined depth threshold.

7. A process as in any of claims 1 to 6 wherein said steps (a) and (b) are performed for each pixel in said image.

8. A process as in any of claims 1 to 7 wherein said steps (a)-(c) are continually performed for a pixel until said comparison step reveals said depth value exceeds said depth value.

9. A process as in any of claims 1 to 8 wherein said process is performed for a given sample location having an associated depth, and said averaging step excludes from said average, sample color values closer than the depth associated with said given sample location.

10. A 3D graphics system including, when in operation:
a frame buffer memory providing sample color values and associated sample depth values representing an image;
a comparison arrangement that reads a sample depth value from said memory and compares said sample depth value with at least one depth threshold;
a determining arrangement that determines a number of plural sample color values to be averaged based on said comparison;
an averaging arrangement that accesses said determined number of plural sample color values from said memory and averages said determined number of plural sample color values; and
a display arrangement that generates a display based on said averaged color values.

11. A system as in claim 10 wherein said averaging arrangement averages adjacent sample color values.

12. A system as in claim 10 wherein said averaging arrangement averages sample color values adjacent to one another along a predetermined axis.

13. A system as in claim 12 wherein said predetermined axis comprises the x axis.

14. A system as in any of claims 10 to 13 wherein said system further includes a line buffer for storing said number of associated sample color values, and said averaging arrangement averages said associated sample color values from said line buffer.

15. A system as claimed in any of claims 10 to 14 wherein said system further includes dithering logic that dithers said depth value, and said comparing arrangement compares said dithered depth value with said at least one predetermined depth threshold.

16. A system as in any of claims 10 to 15 wherein said system creates an average for each pixel in said image.

17. A system as in any of claims 10 to 16 wherein said system continually averages said sample values for a pixel until said comparison arrangement reveals said depth value exceeds said depth value.

18. A system as in any of claims 10 to 17 wherein said averaging arrangement excludes from said average, sample color values closer than the depth associated with said given sample location.

19. A process for blurring portions of an image based on depth, said process comprising:
(a) determining a depth value associated with a pixel location;
(b) averaging color associated with said pixel location with a number of further pixel location colors, said number being selected based on said depth value; and
(c) displaying said averaged color at said pixel location.

20. A process as in claim 19 wherein said averaging step excludes pixel locations closer than said depth value.

21. A process as in claim 19 wherein said averaging step averages pixel location colors adjacent said pixel location in a predetermined direction.

22. A process as in any of claims 19 to 21 wherein said number selected by said averaging step ranges from zero to three.

23. A process as in any of claims 19 to 22 wherein said averaging step includes comparing said determined depth value with at least one predetermined threshold.

24. A process as in claim 23 wherein said number is selected based on the relationship between said depth value and said at least one predetermined threshold.

25. An emulator for emulating a 3D graphics system including, when in operation:
a frame buffer memory providing sample color values and associated sample depth values representing an image;
a comparison arrangement that reads a sample depth value from said memory and compares said sample depth value with at least one depth threshold;
a determining arrangement that determines a number of plural sample color values to be averaged based on said comparison;
an averaging arrangement that accesses said determined number of plural sample color values from said memory and averages said determined number of plural sample color values; and
a display arrangement that generates a display based on said averaged color values.
